(19)

Europäisches
Patentamt

European
Patent Office

Office européen
des brevets

(11) **EP 4 474 573 A1**

(12) **EUROPEAN PATENT APPLICATION**

(43) Date of publication:
**11.12.2024 Bulletin 2024/50**

(21) Application number: **24180665.2**

(22) Date of filing: **07.06.2024**

(51) International Patent Classification (IPC):
**D21H 19/50** (2006.01)     **D21H 27/10** (2006.01)

(52) Cooperative Patent Classification (CPC):
**D21H 19/50; C08H 1/00; C09D 189/00; D21H 27/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.06.2023  LU 504451**

(71) Applicant: **Traceless Materials GmbH
20457 Hamburg (DE)**

(72) Inventors:
• **Lamp, Anne
20457 Hamburg (DE)**

• **Eixenberger, Daniela
20457 Hamburg (DE)**
• **Cataldo, Alessandro
20457 Hamburg (DE)**
• **Saltik, Hande
20457 Hamburg (DE)**
• **Rajesh, Arjun
20457 Hamburg (DE)**
• **Mechelk, Philipp
20457 Hamburg (DE)**

(74) Representative: **Sonnenberg Harrison
Partnerschaft mbB
Herzogspitalstraße 10a
80331 München (DE)**

(54) **PROCESS FOR PRODUCING A COATED MATERIAL, IN PARTICULAR A COATING LAYER OF A PROLAMIN-BASED MATERIAL**

(57) A process for producing a coated material, in particular a coating layer of a prolamin-based material, comprising providing an input material comprising substantially proteins, lipids and additives, and applying the input material on a substrate, thereby obtaining the coated material having the following properties: a KIT value above 11, a WVTR value strictly below 55 g/m$^2$/day, a Cobb 1800 value strictly below 15 g/m$^2$ and heat sealability properties.

```
           START

    Providing an input material

           Grinding

          Solubilizing

          Depositing

         Coated material

            END
```

FIG. 1

EP 4 474 573 A1

**Description**

BACKGROUND OF THE INVENTION

This application claims priority of the Luxembourg application LU504451, filed on 7 June 2023 the entire content thereof being incorporated herein by reference.

Technical Field

The present invention relates to a process for producing a coated material, in particular a coating layer of a prolamin-based material.

Background Art

International patent application WO 2012/068118 A1 discloses a composition comprising only the combination of a prolamin, a surfactant and water that can provide oil and grease resistance to a paper, textile or other substrate. WO 2012/068118 A1 discloses a method of coating the substrate comprising the step of applying a coating composition comprising from 5-15% by weight prolamin, from 5 to 15% by weight surfactant and from 70-90% by weight water in further combination with polysaccharides. The prolamin is zein, the surfactant is sodium dodecyl sulfate (SDS) and the substrate is selected from the group consisting of paper, paper board, wood, inorganic substrates and textile products.
SDS is not food-approved at a concentration above 0.5 wt.%. Furthermore, SDS is not listed among the Authorized Substances in the Annex I, Plastics Food Contact Regulation 10/2011/EU, as amended by Regulation 2020/1245/EU, September 2020.
In addition, the polysaccharides in WO 2012/068118 A1 are selected among starches, because the starches act as binders. The starches are water soluble and attach to cellulose of the paper and to zein. The starches enable keeping the paper and the zein together and prevent an easy wiping off of the coating composition comprising the zein from the substrate made of paper.
CN 1 302 550 A discloses an alcohol-soluble corn protein film by taking corn gluten as a raw material, extracting alcohol-soluble corn protein in an ethanol solution, concentrating the extracting solution, adding an appropriate auxiliary agent, and directly casting to prepare an alcohol-soluble corn protein film. The alcohol-soluble corn protein film is a thin film that has the functions of oxygen isolation, moisture resistance and oil separation, can resist high temperature of 200 DEG C, is resistant to microwave oven baking, is good in printability, can be eaten, is swollen with water, is good in taste, is an edible function packaging film, and can be used for packaging food, medicines and chemicals.
US 2004/056388 A1 discloses a FILM E3 having improved properties over a FILM B2 (iii) increased resistance to splash water, (iv) decreased water vapor permeability, e.g., about 10% decrease. The film of US 2004/056388 A1 cannot bend but cracks under tension. The cracks imply deteriorated barrier properties.
WO 2021/249621 discloses a process for producing water-resistant films for corn gluten meal.
US 2 185 119 A discloses that 10 parts of zein are mixed with 40 parts of furfuryl alcohol. On stirring and with the application of heat in the order of about 185° to 195° F, a clear stable solution of the zein in the furfuryl alcohol is formed. The films are very strong and have unusual adherent properties. With the aid of these coating compositions the film forming properties thereof can be built up to produce a film of greater toughness, flexibility, hardness and gloss than is capable of being formed from coating compositions.
There is a need for a process for producing a food-contact safe coated material, in particular a coating layer of a prolamin-based material, with improved barrier resistance properties.

SUMMARY OF THE INVENTION

This problem is solved by the subject-matter of claim 1, 4, 11, 14 and 19. Further aspects and preferred embodiments of the present invention are defined in the process and use claims as well as in the dependent claims and result from the following description, the appended examples and especially the appended further patent claims.
In a first aspect, a process for producing a coated material, in particular a coating layer of a prolamin-based material, is taught in this disclosure. The process comprises providing an input material comprising substantially proteins, lipids and additives, the proteins comprising prolamin, solubilizing the input material in an organic-based solvent, and depositing the liquid input material on a substrate, thereby obtaining the coated material having at least two of the following properties: a KIT value above 11, a WVTR value strictly below 55 g/m2/day, a Cobb 1800 value strictly below 15 g/m2 and proper heat sealability properties.
In a second aspect, a process for producing a coated material, in particular a coating layer of a prolamin-based material, comprises providing an input material comprising substantially proteins, lipids and additives. The process further comprises applying the input material on a substrate, thereby obtaining the coated material having the following properties: a KIT value above 11, a WVTR value strictly below 55 g/m$^2$/day, a Cobb 1800 value strictly below 75 g/m$^2$, and proper heat sealability properties.

The term "lipids" refers to compounds that are soluble in organic solvents and insoluble in polar solvents such as water. Lipids include fats and oils, such as triglycerides, phospholipids, or waxes.

The term "fats" refers to a type of lipid consisting of triesters of glycerol and fatty acids or triglycerides.

The term "fatty acid" refers to a carboxylic acid with an aliphatic chain, which is either saturated or unsaturated.

The term "coated material" refers to a coating layer on a substrate. In other words, a coated material comprises a coating, such as a film, arranged, on a substrate.

The term "heat sealability properties" may be quantified by the likelihood of the weld to opening and at the same time also the risk of delamination, i.e. the separation, of the coating layer from the substrate.

In a further aspect, a process for producing a coated material, in particular a coated material with a substrate and a coating layer with prolamin-based material obtained from a corn gluten source is taught in this disclosure. The process comprises producing an input material in form of granulates, comprising the steps (i) mixing a biomass containing prolamins, such as a grain source or a water insoluble fraction of a grain, having prolamins and lipids, and an organic solvent to obtain undissolved components and dissolved components comprising dissolved prolamin with a folded configuration, lipids and other dissolved components, (ii) extracting said dissolved components into a first liquid and extracting undissolved components in a first solid, such that the dissolved prolamins in the folded configuration are in the first liquid for at least 80 %, (iii) separating the first solid from the first liquid, (iv) recovering said input material from the first liquid as powder or slurry by removing the organic solvent, and optionally the steps of extruding the recovered input material thereby obtaining the input material in form of granulates, extruding the input material with a die of an extruder, and applying the extruded input material on a substrate, thereby obtaining the coated material.

In a further aspect, a process for producing a coated material, in particular a coated material with a substrate and a coating layer from a granulate obtained from a prolamin source, the granulate being thermoplastic and preferably having capacities of being extrudable in an extrusion die is fur the process comprises extruding the granulate with a die, and depositing the extruded material on the substrate, thereby obtaining the coated material.

In a further aspect, a coated material comprising a substrate and a coating layer from a granulate obtained from a prolamin source is taught in this disclosure. The coated material has at least two of the following properties: a KIT value above 11, a WVTR value strictly below 55 g/m2/day, a Cobb 1800 value strictly below 75 g/m2; and proper heat sealability properties.

According to the first aspect and to the second aspect, the coated material has improved water resistance properties. The coated material has further improved vapor resistance properties, and fat resistance properties. The coated material is stable and has proper heat sealability properties. The process of the present invention does not need a step of adding cross-linkers or polysaccharides to the input material.

In a further aspect, the input material comprises mainly of above 40 wt. % of proteins on a dry basis, more preferably above 50 wt.% of proteins, between 1 wt. % and 40 wt. % of lipids, between 5 wt. % and 40 wt. % of additives, preferably the additives are selected from one of processing additives, hydrophobic additives or a combination thereof, more preferably the additives are selected from between 5 wt.% and 20 wt.% of processing additives, from between 5 wt.% and 20 wt.% of hydrophobic additives, or a combination therefor.

The terms "processing additives" and "hydrophobic additives" refer to two distinct categories of additives used in the formulation of coating materials. The additives used in the formulation of the coating materials are known, for example, in "Protein-Based Films: Advances in the Development of Biomaterials Applicable to Food Packaging", Sergio J. Calva-Estrad et al., Food Eng Rev (2019) 11:78-92, https://doi.org/10.1007/s12393-019-09189-w.

Processing additives are known as substances added to a coating formulation to enhance the performance of a resin or a binder during a manufacturing process. The processing additives are designed to improve the flow and leveling properties of a final coating, helping to reduce the occurrence of defects in the coating, such as fisheyes, orange peel, and Bénard cells. Examples of processing additives comprise surfactants and/ or small linear alcohols.

Hydrophobic additives are known as substances added to the coating formulation to impart water-repellent properties to the final coating. The hydrophobic additives are designed to reduce water absorption and improve moisture resistance, thereby enhancing the durability and protective qualities of the final coating, especially in environments exposed to water or humidity. Examples of hydrophobic additives comprise lipids. In one aspect, the prolamin-based material comprises prolamins with naturally grown prolamin structures and distributions, and lipids with naturally grown lipid structure and distributions.

The term "naturally grown prolamin structures and distributions" may refer to prolamin structures and distributions formed in nature in the prolamin-based material. The term "lipids with naturally grown lipid structure and distributions" may refer to lipid structure and distributions formed in nature in the lipids of the prolamin-based material.

In an aspect, the substrate is a cellulose-based substrate, or a paperboard-based substrate.

In one further aspect, the process further comprises solubilizing the input material in an organic-based solvent prior to the applying on the substrate, thereby obtaining the coated material, characterised in that the organic-based solvent comprises at least 60 % wt. of ethanol. The organic-based solvent enables solubilizing prolamin in the input material and a fast drying of the coated material.

In one aspect, the extruding is conducted at temperatures of at least 70°C, preferably between 80°C and 140°C, more preferably at 100°C.

In one aspect, the extruder is a single screw extruder, preferably the single screw has a screw speed of at least 20 rpm, more preferably a screw speed between 30 rpm and 130 rpm, and more preferably 90 rpm.

In one aspect, the extruder is a twin screw extruder, preferably the twin screw extruder has a screw speed of at least 20 rpm, more preferably between 30 rpm and 130 rpm, and more preferably 90 rpm.

In one aspect, the process comprises the depositing of the extruded input material on the substrate is followed by cooling the deposited material, preferably the cooling is conducted at temperatures between 60°C and 110°C, more preferably between 70°C and 100°C, more preferably at 85°C. The cooling enables enhancing adhesive properties of the input material as a coating layer on the substrate.

In a further aspect, a use of the coated material obtained is taught in this disclosure. The coated material is used for paper bags, shipping bags, frozen or non-frozen food containers.

BRIEF DESCRIPTION OF THE DRAWINGS

Fig. 1 illustrates a process scheme of a process for producing a coated material, in particular a coated material with a substrate and a coating layer of a prolamin-based material according to an embodiment of the present invention.
Fig. 2 illustrates a process scheme of a process for producing a coated material, in particular a coated material with a substrate and a coating layer of a prolamin-based material according to another embodiment of the present invention.
Fig. 3 illustrates a coated material compared to a zein-based material coated on a substrate.

DETAILED DESCRIPTION

Input material

The process for producing a coated material, in particular a coating layer of a prolamin-based material, comprises providing an input material comprising substantially proteins, lipids and additives, the proteins comprising prolamin.

In one example, the input material comprises at least 700 mg/g dry matter of proteins, including at most 250 mg/g of fat.

In a further example, the input material comprises between 750 mg/g dry matter and 950 mg/g dry matter of proteins.

In a further example, the input material comprises 800 mg/g dry matter of proteins.

The prolamin is chosen, for example, from zein, hordein, gliadin or kafirin, preferably zein.

The prolamin-based material comprises prolamins with naturally grown prolamin structures and distributions and lipids with naturally grown lipid structure and distributions.

In one example, the input material comprises at least 15 mg/g dry matter of fat, including at least 18 g of saturated fatty acids per 100 g of fat.

In a further example, the input material comprises between 15 mg/g dry matter and 250 mg/g dry matter of the fat, including between 18 g and 25 g of saturated fatty acids per 100 g fat.

In one example, the input material comprises above 50 wt. % of proteins, between 1 wt. % and 40 wt. % of lipids, and between 5 wt. % and 40 wt. % of additives.

In a further example, the input material comprises above 60 wt.% of proteins. In a further example, the input material comprises additives of at most 35 wt. %.

In one example, the additives are selected from one of processing additives, hydrophobic additives or a combination thereof. In one example, the additives comprise between 5 wt.% and 20 wt.% of processing additives, between 5 wt.% and 20 wt.% of hydrophobic additives, or a combination thereof.

In one aspect, the processing additives are selected from one of surfactants and/or linear alcohols, such as short-chain linear alcohols.

In one aspect, the hydrophobic additives are selected from lipids.

In another example, the input material comprises between 5 wt.% and 10 wt.% of processing additives and between 5 wt.% and 10 wt.% of hydrophobic additives, so that the coated material is flexible.

A suitable input material with "defined" proteins and "defined" lipids is produced prior to the providing of the input material.

In one example, the input material is in the form of a powder or a granulate.

In one example, the input material is produced in form of granulates prior to the providing.

The producing of the input material in form of granulates comprises the steps of

(i) mixing a biomass containing prolamins, such as a grain source or a water insoluble fraction of a grain, having prolamins and lipids, and an organic solvent to obtain undissolved components and dissolved components comprising dissolved prolamin with a folded configuration, lipids and other dissolved components;

(ii) extracting said dissolved components into a first liquid and extracting undissolved components in a first solid, such that the dissolved prolamins in the folded configuration are in the first liquid for at least 80 %.

(iii) separating the first solid from the first liquid;

(iv) recovering the input material from the first liquid as powder or slurry by removing the organic solvent.

The recovered input material is a thermoplastic material.

The extraction is performed by maintaining the dielectric constant $\varepsilon_r$ (at 25°C) between 30 and 42. This step enables, among other, that the conformation, i.e., the configuration, of the prolamin in the input material remains identical to the conformation of the prolamin after depositing the input material on the substrate to obtain the coating layer. The specific conformation of the prolamins refers to the folding of the prolamins.

The unique characteristics of the recovered input material to be thermoplastic appear to be linked both to the folding of the prolamin and the lipid and the obviously existing interaction between these components. The structural composition of the prolamin remains unaltered.

In a further aspect, the ratios among the lipids/fatty acids in the input material are maintained throughout the entire process of the production of the input material. The ratios among the lipids/fatty acids are maintained at the following levels in wt.-% of total lipids, given in the following order: free fatty acids / monoglycerides / diglycerides / triglycerides: 91/3/5/1 in the first liquid phase, and 95/2/3/0 in a second liquid phase. The ratio in corn gluten meal is of 84/3/8/4 and in commercial Zein: 54/9/26/11. This is advantageous to have high free fatty acid content, it increases the flexibility in films, and it enhances the thermoplastic properties by resulting in a higher MVR. It is to be noted that these ratios are dependent on the initial biomass and might therefore deviate.

Maintaining ratios among the lipids/fatty acids is controlled by adjusting the dielectric constant in order to overcome changes of the lipid distribution in the grain source material as an example of biomass containing prolamins.

The content of lipids with respect to the dry mass is preferably maintained throughout the process to be above 4 percent in weight, preferably between 4 and 23%.

In one embodiment, the content of lipids with respect to the dry mass is below 4 percent in weight.

The extraction is performed during a time less than a time te (in min) defined by: ke1*T (in °C) + ke2* $\varepsilon_r$ (at 25°C) + ke3*p (bar absolute), wherein te is expressed in minutes, ke1 is a constant in the range between 0.04 and 1.00, preferably between 0.05 and 0.9, more preferably between 0.1 and 0.6, ke2 is a constant in the range between 0.08 and 2.00, preferably between 0.1 and 1.5, more preferably between 0.4 and 0.9, and ke3 is a constant in the range between 1.70 and 60.00, preferably between 5 and 50, more preferably between 15 and 35.

The recovering is performed under the conditions of maintaining temperature of the prolamins below 80°C, preferably below 75°C, most preferably below 70°C, maintaining a dielectric constant $\varepsilon_r$ (at 25°C) between 30 and 42, maintaining a pressure level at below 2 bar, performing the recovering during a time less than a recovering time t (in min) defined by kr1*T (in °C) + kr2* $\varepsilon_r$ (at 25°C) + kr3*p (bar absolute) wherein kr1 is in the range between 0.0004 and 12.0000, kr2 is in the range between 0.0008 and 7.0000; and kr3 is in the range between 0.0167 and 80000.0000.

It should be noted that kr1, kr2 and kr3 are constants. kr1 is in the range between 0.0004 and 12, preferably between 1 and 10, more preferably between 2 and 5, kr2 is in the range between 0.0008 and 7, preferably between 1 and 6, more preferably between 2 and 5, and kr3 is in the range between 0.0167 and 80000, preferably between 1 and 70000, more preferably between 10000 and 60000.

It is to be noted that such parameters have been obtained by intense research and are a clearly motivated choice and cannot be assumed to have been previously applied, even if in some prior art documents products made from commercial Zein are allegedly exhibiting thermoplastic characteristics. Indeed, in the prior art there is no evidence that the products made from commercial Zein could exhibit thermoplastic characteristics, at least not in a way to be suitable for any industrial application. This can also be seen from the comparative examples discussed further below.

The recovering time t can largely vary depending on the used drying/recovering technology and would be for example in the range between 30 minutes and 15 hours when using a standard oven.

First embodiment

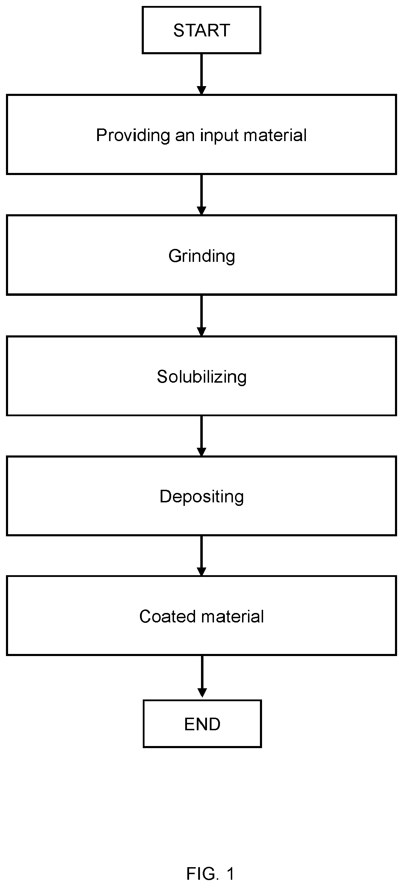

The providing of the input material comprising substantially proteins, lipids and additives, the proteins comprising prolamins, in one aspect, followed by solubilizing the input material with an organic-based solvent to obtain a liquid input material, i.e. a coating solution, as illustrated in Fig. 1.

In one example, the organic-based solvent comprises ethanol and water. The organic-based solvent comprises, for example, at least 60 % by weight (wt. %) of ethanol, preferably between 70 % by weight and 85 % by weight of ethanol, more preferably 80 % by weight of ethanol.

The coating solution is, for example, a dispersion. The dispersion comprises, for example, 50 % by weight of dissolved particles, for example, proteins of prolamin, lipids, and other dissolved components, such as additives.

In a further example, the solubilization is conducted in a high-shear mixer, to avoid a presence of undissolved particles in the coating solution. Undissolved particles in the coating solution led to a coating material with a coating layer that is not homogeneous. Undissolved particles are fracture spots in the coated material. The undissolved particles lead to a rupture of the coated material, i.e., in case the coated material is bent. Filtrating the coated solution, for example by using a 100 μm cloth, enables obtaining a coating solution with substantially no undissolved particles, i.e., a clear coating solution.

In one non-limiting example, at least one additive is added to the coating solution.

In one further non-limiting example, a mixture of additives is added to the coating solution. The mixture of additives comprises, for example, three additives chosen from two processing additives and one hydrophobic additive.

In one example, the two processing additives are selected from surfactants and/or linear alcohols, such as short-chain linear alcohols, and the one hydrophobic additive is a lipid.

The concentration of the sum of additives in the coating solution is, for example, at least 10 % by weight, preferably between 20 % by weight and 40 % by weight.

In one example, the process comprises a step of grinding the input material prior to the solubilization of the input material with the organic-based solvent for reducing the particle size of the input material to at most 1000 micrometers, preferably at most 500 micrometers.

The solubilization is followed by depositing the liquid input material, i.e., the coating solution, on a substrate, thereby obtaining the coated material.

The depositing of the coating solution can be performed by suitable means such as an applicator having a coating knife and is conducted, in one example, with a vacuum-assisted film coating applicator. The gap between the vacuum-assisted film coating applicator and the coating solution can be chosen depending on the coating application. The gap between the vacuum-assisted film coating applicator and the coating solution can be chosen between 10 and 100 micrometers, more preferably between 20 and 80 micrometers, more preferably between 30 and 50 micrometers.

Using a vacuum-assisted film coating applicator enables a firm suction of the coating solution on a lower layer of the substrate, i.e., a surface of the substrate to be coated, e.g. a surface of a cardboard. The firm suction enables the coating solution not to slip off the substrate. The coating solution on the substrate has a thickness of at least 5 microns, between 5 and 100 microns and preferably between 10 and 40 microns.

The substrate is for example, a film, a cellulose-based substrate, a paper-based substrate, a paperboard-based substrate, or a cardboard.,

The process comprises, in one example, drying the deposited liquid input material on the substrate, preferably at room temperature. The drying leads to an evaporation of the organic-based solvent from the coated material.

The process advantageously does not require applying heat, due to the solubilization in organic solvent.

In one example, heat could be applied to further speed up a drying process.

The process further does not require an additional step of applying high pressure, i.e. a pressure larger than atmospheric pressure. The high pressure increases the time for drying the coated material.

<u>Second embodiment</u>

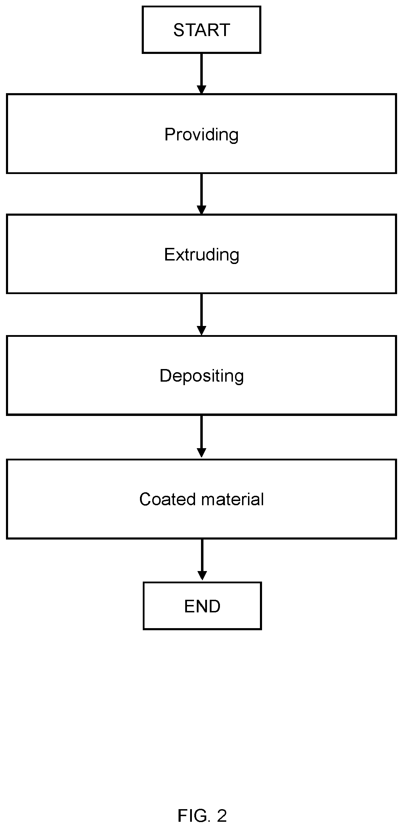

The providing of the input material comprising substantially proteins, lipids and additives is, in another aspect, followed by extruding the input material in an extruder as illustrated in Fig. 2.

The extruder is, for example, a single screw extruder or a twin screw extruder. In a further example, the extruder is a twin screw extruder.

Temperatures in the extruder are of at least 70°C, of at least 85°C, from 95°C to 125°C, between 80°C and 140°C, or 105°C.

The extruding is conducted with a screw speed of at least 20 rpm, at least 30 rpm, between 40 rpm and 200 rpm, between 30 rpm and 130 rpm, between 70 rpm and 120 rpm, for example at a screw speed of 90 rpm.

The extruded material is extruded through an opening of an extrusion die made of a round hole nozzle, preferably the round hole nozzle has a diameter of at least 1.3 mm, preferably of 2.7 mm. In one example, the nozzle is a flat die with a size of 200*0.6 mm.

In a further example, the extruded material is extruded through an opening of an extrusion die made of a flat nozzle, preferably the flat nozzle has a gap of at least 0.1 mm. The extrusion through the flat nozzle leads to the obtaining of the extruded material in the form of a stretched melted film.

The extruded material is deposited on the substrate, in particular, the extruded material is attached to one side of the substrate with a pressure roll. The extruded material is elongated on the substrate, followed by deposited on the substrate.

The substrate is, for example, located beneath the opening of the extrusion die, preferably the substrate has a continuous displacement speed.

In one example, the substrate has a higher speed than the extruded material that is deposited on the substrate.

In one example, the substrate has a smooth surface.

In one example, the extruding is conducted at the extrusion die of the extruder at a pressure of at least 5 bars, between 15 bars and 90 bars.

The process further comprises cooling the deposited material by using cooling rolls.

In one example, the cooling is conducted at temperatures between 60°C and 110°C, between 70°C and 100°C, at 85°C.

Cooling rolls are, in one example, heated to temperatures above 50°C to enable adhesion between the input material and the substrate, more preferably at temperatures between 60°C and 90°C.

The substrate is for example, a film, a cellulose-based substrate, a paper-based substrate, a paperboard-based substrate, or a cardboard.

The coated material has the properties of an optically clear surface, and a uniform thickness of the coating layer on the substrate.

Uniform thickness means a coating thickness tolerance of 2-5 $g/m^2$.

Optically clear means that the surface of the coated material is translucent to the naked eye.

The process enables obtaining a homogeneous coated material.

The homogeneity of the coated material is significantly better when the input material is in form of granules compared to the input material in form of powders. The reason is that the extrusion and/or granulation homogenizes the input material throughout the extrusion granulation. The extrusion makes the input material easier to melt into a uniform mass, and the uniform mass coated on the substrate leads to a homogeneous coated material. Without extrusion and/or granulation the extruding of the input material for a use as a paper coating, for example, might result in a coated material comprising unmelted particles and in a coated material with an inhomogeneous coating layer.

Third embodiment

In another aspect, a process for producing a coated material comprises producing an input material in form of granulates. The producing of the input material comprises first mixing a biomass containing prolamins, such as a grain source or a water insoluble fraction of a grain, having prolamins and lipids, and an organic solvent to obtain undissolved components and dissolved components comprising dissolved prolamin with a folded configuration, lipids and other dissolved components. The process further comprises extracting said dissolved components into a first liquid and extracting undissolved components in a first solid, such that the dissolved prolamins in the folded configuration are in the first liquid for at least 80 %. The extraction of said dissolved components into a first liquid and extracting undissolved components in a first solid is followed by separating the first solid from the first liquid. Then, said input material from the first liquid is recovered as powder or slurry by removing the organic solvent. In some aspect, the powder or slurry can be extruded to form granulates. The process further comprises coating the recovered said input material on a substrate, thereby obtaining the coated material.

In one aspect, the coating comprises extruding the recovered said input material, followed by outputting the extruded material via a die of an extruder on a substrate. In one aspect, the extruded material is attached to one side of the substrate with a pressure roll. The extruded material is elongated on the substrate, followed by deposited on the substrate, thereby obtaining a coated material.

In a further aspect, the pressure roll is cooled for attachment of the extruded material on the substrate.

In another aspect, the coating is conducted by dissolving the recovered said input material in an organic-based solvent, such as an ethanol - water based solvent. The dissolving is followed by depositing the dissolved recovered said input on a substrate, thereby obtaining the coated material. The dissolved recovered said input on a substrate is deposited, i.e., coated, for example, using an applicator having a coating knife, with a vacuum-assisted film coating applicator, or other suitable applicator, and/or casted on a substrate, thereby obtaining the coated material.

Coated material

The coated material obtained from the first embodiment, from the second embodiment, and from the third embodiment, have surprisingly improved barrier resistance against water, i.e., water resistance properties, improved vapor resistance properties, improved fat resistance properties, i.e. oil resistance properties and improved heat sealability properties.

Sealability mainly aims at identifying the quality of a thermoweld provided between two pieces of coated material but also enables to qualify a quality of adhesion between a layer and a substrate made in contact to each other since upon trying to tear open the welding itself can be jeopardized or the bonding between the layer and the substrate.

The thickness of the coating layer on the substrate is, for example, between 10 and 25 microns. In another example, the thickness of the coating layer is between 4 and 40 $g/m^2$. In a further example, the thickness of the coating layer is between 2 and 5 $g/m^2$.

In the first embodiment, the coated material has properties of a KIT value above 11. The KIT Test is run according to TAPPI Test Method T559. The coated material further has a water vapor transmission rate (WVTR) value strictly below 55 $g/m^2$/day. The coated material has a Cobb 1800 value strictly below 15 $g/m^2$. The coated material has proper heat sealability properties.

In the first embodiment, the liquid input material maintains, for example, a specific conformation induced by the substrate during the steps of the process, in particular the specific conformation of the input material is substantially identical after the depositing of the liquid input material on the substrate and during the drying of the deposited liquid input material on the substrate. The specific conformation of the prolamins is unaltered during the process.

In the second embodiment, the coated material has properties of a KIT value above 11. The KIT Test is run according to TAPPI Test Method T559. The coated material further has a water vapor transmission rate (WVTR) value strictly below 55 $g/m^2$/day. The coated material has a Cobb 1800 value strictly below 75 $g/m^2$. The coated material has heat sealability properties.

In the second embodiment, the coating layer has, for example, the same specific conformation induced by the substrate after the extruded input material is deposited on the substrate and after the cooling of the deposited input material. The specific conformation of the prolamins is unaltered during the process, for example, the folded conformation of the prolamins remains identical.

The coated material comprises prolamins with naturally grown prolamin structures and distributions. The coated material comprises lipids with naturally grown lipid structure and distributions.

The coated material can be used in various applications. For example, the coated material is used for frozen or non-frozen food packaging, paper bags or shipping bags.

In the following, the invention is explained in more detail by means of selected examples.

Heat sealability properties are measured by qualitatively analyzing the likelihood of the weld to open and at the same time also the risk of delamination, i.e. the separation, of the coating layer from the substrate. If the coating layer is easily delaminated from the substrate, i.e. if the coating layer can be delaminated from the substrate by hand, the coated material does not have proper heat sealability properties.

The heat sealability properties are quantified with numbers ranging from 1 to 4. The heat sealability properties were quantified after heat sealing at 150°C, 3 bars, during 0,5 s by conducting the delamination, i.e. the separation of the substrate from the coating layer. A separation of the coating layer from the substrate was quantified by a 1. A separation of the coating layer from the substrate without taking the coating layer off the substrate is quantified by 2. The coating layer being broken during the separation was quantified by a 3. A tear of the fibers of the coating layer was quantified by a 4. Proper heat sealability properties would range between 3 and 4 and demonstrate that the coated material can be treated with wellknown heat welding equipment, such as used in food packaging, in take-out restaurant, and the like. The idea of proper heat sealability properties can thus be assumed to be well known to the person skilled in the art and reference can be given to the standards of the food packaging industry in this respect.

Input material

Different input material compositions were tested further to form the coated material.

Example 1 - Input material 1:

Corn gluten meal was obtained from a starch production plant. The corn gluten meal was then mixed with an ethanol-mixture with a dielectric constant of 35. The mixture was heated to 50 °C and then stirred at 50°C for two hours. Afterwards, solids were removed without cooling by centrifugation for 5 min at 5000 x g. The recovered first supernatant was cooled to -18 °C and then left at -18 °C for four hours without changing the dielectric constant. The formed precipitated solids were removed by centrifugation at 4 °C for 5 min at 5000 x g. The recovered second supernatant was dried at room temperature, then milled to a fine powder and sieved to < 0,5 mm. The powder was then mixed with 20 wt.-% glycerol, and then extruded to granulates at 100°C. The granulates, i.e. the input material 1, showed good thermoplastic properties, by having a melt volume rate of 50 ccm / 10 min (5 kg).

Example 2 - Input material 2:

The process of Example 1 where the second liquid phase was filtered in a membrane filtration at 4 kDa and 7 bar at room temperature until a viscous liquid as the first retentate was formed. The permeate was filtered through a 200 Da membrane at room temperature until a viscous liquid as the second retentate was formed. The first retentate and the second retentate were combined and mixed with 20 wt-% glycerol, then dried at room temperature, then milled to a powder and sieved to < 2 mm, and then extruded to granulates at 140°C. The granulates, i.e. Input material 2, showed good thermoplastic properties, by having a melt volume rate at 130°C of 78 ccm /10 min (5 kg).

Example 3 - Input material 3:

The process of Example 1 where the dielectric constant of the solvent during the extraction was changed to 38, which resulted in the same product quality.

Example 4 - Input material 4:

The process of Example 1 where the dielectric constant during the extraction was changed to 50, where the resulting product, i.e. input material 4, showed no thermoplastic properties and could not be extruded.

Examples 5, 6 and 7 were produced with different starting material to see if the produced input material can be further processed to obtain a coated material.

Example 5 - Input material 5:

Commercial zein + 15 % (w/w) additives (Comparative Example)

The input material of Example 5 shows a substantial inflating and hardening behavior. produced with commercial zein as input material to be remelted and recycled is not possible, the results indicate no suitability of commercial zein for being used as an input material for producing a coated material.

Example 6 - Input material 6

Thermoplastic material X + 15 % (w/w) additives (Illustrative Example)

The thermoplastic material X in form of granulates was produced according to the invention from a biomass and comprises a protein content of 74 to 78 %.

The thermoplastic material X is extruded with ease and a series of extrudate segments with uniform length. This proves the occurrence of a melting process during the measurement and thus that the process enables the obtention of a thermoplastic material. The produced thermoplastic material X also shows no sign of decomposition, suggesting the ability of the produced material of Example 6 to be used as an input material for producing a coated material.

Example 7 - Input material 7

Thermoplastic material Y + 15 % (w/w) additives (Illustrative Example)

The material Y is produced from a pre-treated biomass containing prolamins and lipids and comprises a protein content of 78 to 95 %. The material Y is extruded with ease and a series of extrudate segments with uniform length can be obtained. This proves the occurrence of a melting process during the measurement and thus that the process enables the obtention of a thermoplastic material. The produced material also shows no sign of decomposition, suggesting the ability of the produced material of Example 12 to be remolten and recycled. The added additive in example 7 can be seen as a plasticizer or a lubricant in the process.

The results indicate the suitability of the produced material of Example 7 to be used as an input material for producing a coated material.

The inventors have found out that the produced input material from zein cannot be extruded, regardless of the die diameter of the extruder, because the produced input material from zein formulations gets stuck in the extruder beforehand. The produced input material from zein is not even transported to the end of the die of the extruder and so no coated material can be produced.

Coated material

Example 8 - Coated material 8

Example 1 is an illustrative example of the first embodiment.

An input material made of proteins and lipids was dried and solubilized with an organic-based solvent to obtain a coating solution. Additives at a concentration of 40 % by weight were added to the coating solution. The input material was in form of granulates.

The coating solution was solubilized by mixing in a standard Ultra-Turrax equipment, resulting in least undissolved particles. A clear coating solution was achieved after filtration with a 100 micron cloth filter.

The coating solution was applied on a substrate made of paper with a vacuum-assisted film coating applicator. The coating grammages were 25-30 g/m2, resulting in obtaining the coated material with a smooth surface, a shiny surface and a high degree of reproducibility.

The results showed that the coated material was very flexible, thus the coating was completely dry (< 5% residual moisture) and bending in different directions did not lead to cracks or breaking.

The coated material showed appreciable performance in a Moisture Vapor Transmission Rate (WVTR) at 85% rel. humidity of 49.5 g/m$^2$/day after 4 days and a Cobb 1800 value of 22 g/m$^2$.

The separation of the coating material from the substrate is quantified by a 4, so that the coated material has great sealability properties.

Example 9 - Coated material 9

Example 9 is a further illustrative example of the first embodiment. An input material mainly made of proteins and 30 wt. % additives were solubilized with an organic-based solvent made of ethanol. The input material was in form of powder.

The coating solution was solubilized by mixing the coating solution in a SpeedMixer during 10 min at a speed of 3500 rpm. Undissolved particles were removed through a filter with a mesh size of 150 $\mu$m.

The coating solution was applied on a substrate of paper with a vacuum-assisted film coating applicator. The coating was 60 g/m$^2$. The results showed that the coated material was smooth and shiny, as well as flexible.

The results showed that WVTR is 39 g/(m$^2$*day) after three days and the Cobb 1800 value is 2 g/m2.

The separation of the coating material from the substrate is quantified by a 4, the coated material has sealability properties.

Example 10 - Coated material 10

Example 10 is a comparative example.

An input material mainly made of zein and 30 wt% additives was solubilized with an organic solvent made of ethanol. The input material was in form of powder.

The coating solution was solubilized by mixing the coating solution in a SpeedMixer during 10 min at a speed of 3500 rpm. Undissolved particles were removed through a filter with a mesh size of 150 $\mu$m.

The coating solution was applied on a substrate of paper with a vacuum-assisted film coating applicator. The coating was 60 g/m2.

Measures of water resistance properties.

The results showed that WVTR is 41 g/(m2*d) after three days and the Cobb 1800 value is 20 g/m2.

The resulting product is not properly heat sealable. Ruptures are visible, no homogeneous sealing reached.

Example 11 - Coated material 11

Example 11 is an illustrative example of the second embodiment.

An input material mainly made of proteins and 25% of additives was applied. The input material was in form of granulate.

Granulates were used in an extrusion process with paper, applying 80 rpm and between 90 and 125 °C. Cooling rolls for coating adhesion were adjusted to 65°C.

The results showed that the coated material was homogeneous. Coating grammage was 25-30 g/m$^2$.

The results showed that WVTR (5 days, 50 % rel. humidity) is 143 g/(m2*d) and the Cobb 1800 value is 48 g/m2.

The separation of the coating material from the substrate is quantified by a 4, the coated material has sealability properties.

Example 12 - Coated material 12

Example 12 is a comparative example.

An input material made of proteins and fatty acids was extruded in a single screw extruder at temperatures between 85 and 125°C. The input material was in form of powder.

The results showed that the coated material showed inhomogeneous coating. Therefore, no barrier properties were determined for the coated material.

Example 13 - Coated material 13

Example 13 is an illustrative example of the second embodiment.

An input material mainly made of proteins and 30% of additives was applied. The input material was in form of granulate.

Granulates were used in a co-extrusion process with paper, applying 90 rpm and between 90 and 125 °C and using a flat die of 200*0.6 mm. Cooling rolls for coating adhesion were adjusted to 100°C.

The results showed that the coated material was homogeneous. Coating grammage was 60 g/m2.

The results showed that WVTR (4 days, 50 % rel. humidity) is 51 g/(m2*d) and the Cobb 1800 value is 48 g/m2.

The separation of the coating material from the substrate is quantified by a 4, the coated material has sealability properties.

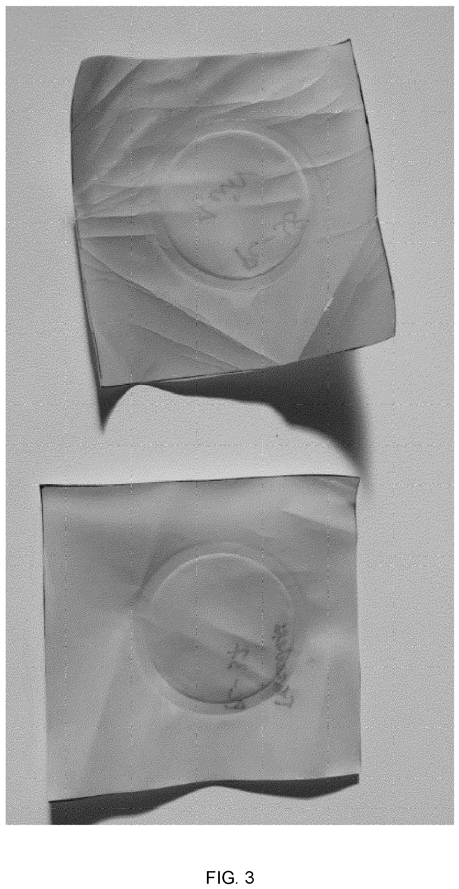

Fig. 3 shows a surface of a coated material made from commercial zein and a surface at the top of the Fig. 3 and a coated material according to the present invention at the bottom. Fig. 3 illustrates that the coated material made from commercial zein is broken by bending, whereas the coated material according to the present invention is not broken by bending.

**Claims**

1. A process for producing a coated material, in particular a coated material with a substrate and a coating layer of a prolamin-based material, comprising:

   providing an input material comprising substantially proteins, lipids and additives, the proteins comprising prolamin;
   solubilizing the input material in an organic-based solvent; and
   depositing the liquid input material on a substrate, thereby obtaining the coated material having at least two of the following properties:

   - a KIT value above 11;
   - a WVTR value strictly below 55 g/m2/day;
   - a Cobb 1800 value strictly below 15 g/m2; and
   - proper heat sealability properties.

2. The process of claim 1, wherein the organic-based solvent comprises at least 65 % wt. of ethanol, preferably between 70 % by weight and 85 % by weight of ethanol, more preferably 80 % by weight of ethanol.

3. The process of claim 1 or 2, further comprising drying the deposited liquid input material on the substrate after the depositing, preferably at room temperature.

4. A process for producing a coated material, in particular a coated material with a substrate and a coating layer of a prolamin-based material, comprising:

   providing an input material comprising substantially proteins, lipids and additives, the proteins comprising prolamin;
   extruding the input material;
   depositing the extruded input material on a substrate, thereby obtaining the coated material having at least two of the following properties:

   - a KIT value above 11;
   - a WVTR value strictly below 55 g/m$^2$/day;

- a Cobb 1800 value strictly below 75 g/m². and
- proper heat sealability properties.

5. The process of claim 4, wherein
the extruding is conducted at temperatures of at least 70°C, preferably between 80°C and 140°C, more preferably at 115°C.

6. The process of claim 4 or 5, wherein
the extruded material is extruded through an opening of an extrusion die made of a flat nozzle, preferably the flat nozzle has a gap of at least 0.1 mm, more preferably with a subsequent pair of roller to form a foil /layer.

7. The process of any one of claims 4 to 6, wherein
the depositing comprises depositing the extruded input material on the substrate located beneath the opening of the extrusion die, preferably the substrate has a continuous displacement speed.

8. The process of any one of claims 4 to 7, wherein

the depositing of the extruded input material on the substrate is followed by cooling the deposited material, preferably the cooling is conducted at temperatures between 60°C and 110°C, more preferably between 70°C and 100°C, more preferably at 85°C.

9. The process of any one of claims 4 to 8, wherein the extruding of the input material and/ or the depositing of the extruded input material on the substrate comprises one of applying heat, applying pressure of a combination thereof to maintain the coating layer on the substrate.

10. The process of any one of the above claims, wherein the input material comprises:

- above 40 wt. % of proteins, more preferably above 50 wt.% of proteins;
- between 1 wt. % and 40 wt. % of lipids;
- between 5 wt. % and 40 wt. % of additives, preferably the additives are selected from one of processing additives, hydrophobic additives or a combination thereof, more preferably the additives are selected from between 5 wt.% and 20 wt.% of processing additives, from between 5 wt.% and 20 wt.% of hydrophobic additives, or a combination thereof

11. A process for producing a coated material, in particular a coated material with a substrate and a coating layer with prolamin-based material obtained from a corn gluten source, comprising:

producing an input material in form of granulates, comprising the steps:

(i) mixing a biomass containing prolamins, such as a grain source or a water insoluble fraction of a grain, having prolamins and lipids, and an organic solvent to obtain undissolved components and dissolved components comprising dissolved prolamin with a folded configuration, lipids and other dissolved components;
(ii) extracting said dissolved components into a first liquid and extracting undissolved components in a first solid,
such that the dissolved prolamins in the folded configuration are in the first liquid for at least 80 %.
(iii) separating the first solid from the first liquid;
(iv) recovering said input material from the first liquid as powder or slurry by removing the organic solvent;

applying the recovered input material on the substrate, thereby obtaining the coated material;
and optionally, prior to the applying of the recovered said input material on the substrate, comprising the steps of:

extruding the recovered input material, thereby obtaining the input material in form of granulates,
extruding the input material with a die of an extruder, followed by
the applying of the extruded recovered input material on the substrate,

12. The process of claim 11, wherein the extracting is performed during a time less than a time te (in min) defined by:

ke1*T (in °C) + ke2* $\varepsilon_r$ (at 25°C) + ke3*p (bar absolute), wherein

te is expressed in minutes;
ke1 is a constant in the range between 0.04 and 1.00;
ke2 is a constant in the range between 0.08 and 2.00; and
ke3 is a constant in the range between 1.70 and 60.00.

13. The process of claim 11, wherein the recovering is performed under the following conditions:

- maintaining temperature of the prolamins below 80°C, preferably below 75°C, most preferably below 70°C;
- maintaining a dielectric constant $\varepsilon_r$ (at 25°C) between 30 and 42;
- maintaining a pressure level at below 2 bar;
- performing the recovering during a time less than a recovering time t (in min) defined by

$$kr1*T \text{ (in °C)} + kr2* \varepsilon r \text{ (at 25°C)} + kr3*p \text{ (bar absolute)}$$

wherein

kr1 is in the range between 0.0004 and 12.0000;
kr2 is in the range between 0.0008 and 7.0000; and
kr3 is in the range between 0.0167 and 80000.0000.

14. A process for producing a coated material, in particular a coated material with a substrate and a coating layer from a granulate obtained from a prolamin source, the granulate being thermoplastic and preferably having capacities of being extrudable in a extrusion die, the process comprising:
extruding the granulate with a die, and

- depositing the extruded material on the substrate, thereby obtaining the coated material

15. The process of any one of the preceding claims, wherein the depositing is conducted to provide for a coating thickness in the range of 10 microns to 50 microns, preferably from 20 microns to 25 microns.

16. The process of any one of the preceding claims, wherein the prolamin-based material comprises:

prolamins with naturally grown prolamin structures and distributions; and
lipids with naturally grown lipid structure and distributions.

17. The process of any one of the preceding claims, wherein the substrate is a cellulose-based substrate, or a paperboard-based substrate.

18. The process of any one of the preceding claims, wherein the substrate is removed from the coating layer to obtain a coating layer comprising the properties/ characteristics of the coated material.

19. Coated material comprising a substrate and a coating layer from a granulate obtained from a prolamin source, having at least two of the following properties:

- a KIT value above 11;
- a WVTR value strictly below 55 g/m2/day;
- a Cobb 1800 value strictly below 75 g/m2; and
- proper heat sealability properties.

20. The coated material according to claim 19, comprising:

- a Cobb 1800 value strictly below 15 g/m$^2$.

21. The coated material obtained by a process according to any one of claims 1 to 18.

22. Use of a coated material obtained from the process of any of the preceding claims for paper bags, shipping bags, frozen or non-frozen food containers.

START

↓

Providing an input material

↓

Grinding

↓

Solubilizing

↓

Depositing

↓

Coated material

↓

END

FIG. 1

```
        ┌─────────────┐
        │    START    │
        └──────┬──────┘
               │
               ▼
  ┌────────────────────────┐
  │       Providing        │
  └────────────┬───────────┘
               │
               ▼
  ┌────────────────────────┐
  │       Extruding        │
  └────────────┬───────────┘
               │
               ▼
  ┌────────────────────────┐
  │       Depositing       │
  └────────────┬───────────┘
               │
               ▼
  ┌────────────────────────┐
  │     Coated material    │
  └────────────┬───────────┘
               │
               ▼
        ┌─────────────┐
        │     END     │
        └─────────────┘
```

FIG. 2

FIG. 3

Europäisches
Patentamt

European
Patent Office

Office européen
des brevets

# EUROPEAN SEARCH REPORT

**Application Number**

EP 24 18 0665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/056388 A1 (PADUA GRACIELA WILD [US] ET AL) 25 March 2004 (2004-03-25) * paragraphs [0041], [0043], [0066], [0099] * * paragraph [0051] - paragraph [0065] * * paragraph [0079] - paragraph [0090] * * claims 1-15 * * paragraph [0082] - paragraph [0088] * ----- | 4-10,14, 15,18-22 | INV. D21H19/50 D21H27/10 |
| X | CN 1 302 550 A (TIANJIN COMMERCIAL COLLEGE [CN]) 11 July 2001 (2001-07-11) * page 1 - page 2 * * claims 1-3 * ----- | 1-3,19, 21,22 | |
| X Y | WO 2021/249621 A1 (TRACELESS MAT GMBH [DE]) 16 December 2021 (2021-12-16) * figure 7 * * page 3, line 4 - line 15 * * claims 1-5 * * page 4, line 3 - line 10 * * page 5, line 8 - page 10, line 11 * ----- | 11-13,16 17 | |
| Y | US 2 185 119 A (COLEMAN ROY E) 26 December 1939 (1939-12-26) * example 4 * ----- | 17 | TECHNICAL FIELDS SEARCHED (IPC) D21H C08H C08L C09D |

The present search report has been drawn up for all claims

| Place of search | Date of completion of the search | Examiner |
|---|---|---|
| Munich | 26 September 2024 | Billet, Aina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 474 573 A1**

## ANNEX TO THE EUROPEAN SEARCH REPORT
## ON EUROPEAN PATENT APPLICATION NO.

EP 24 18 0665

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | | Publication date | Patent family member(s) | | Publication date |
|---|---|---|---|---|---|
| US 2004056388 | A1 | 25-03-2004 | AU 5175701 A | | 12-11-2001 |
| | | | CA 2407729 A1 | | 08-11-2001 |
| | | | US 6635206 B1 | | 21-10-2003 |
| | | | US 2004056388 A1 | | 25-03-2004 |
| | | | WO 0183597 A2 | | 08-11-2001 |
| CN 1302550 | A | 11-07-2001 | NONE | | |
| WO 2021249621 | A1 | 16-12-2021 | BR 112022024963 A2 | | 27-12-2022 |
| | | | CN 116018192 A | | 25-04-2023 |
| | | | EP 4161670 A1 | | 12-04-2023 |
| | | | US 2023271106 A1 | | 31-08-2023 |
| | | | WO 2021249621 A1 | | 16-12-2021 |
| US 2185119 | A | 26-12-1939 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- LU 504451
- WO 2012068118 A1
- CN 1302550 A
- US 2004056388 A1
- WO 2021249621 A
- US 2185119 A

**Non-patent literature cited in the description**

- **SERGIO J. CALVA-ESTRAD et al.** Protein-Based Films: Advances in the Development of Biomaterials Applicable to Food Packaging. *Food Eng,* 2019, vol. 11, 78-92, https://doi.org/10.1007/s12393-019-09189-w